(19) Europäisches Patentamt
European Patent Office
Office européen des brevets

(11) **EP 1 884 332 A2**

(12) **EUROPÄISCHE PATENTANMELDUNG**

(43) Veröffentlichungstag:
**06.02.2008   Patentblatt 2008/06**

(51) Int Cl.:
***B28B 1/24*** *(2006.01)*      ***F16D 1/06*** *(2006.01)*

(21) Anmeldenummer: 07014368.0

(22) Anmeldetag: **21.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **05.08.2006   DE 102006036690**

(71) Anmelder: **Forschungszentrum Karlsruhe GmbH 76133 Karlsruhe (DE)**

(72) Erfinder:
• **Finnah, Guido Dr.**
  **70190 Stuttgart (DE)**
• **Ruprecht, Robert Dr.**
  **75045 Walzbachtal (DE)**

(54) **Verbindung sowie ein Verfahren zur Herstellung derselben**

(57)    Verbindung, umfassend eine einstückige innere Komponente (1) sowie eine einstückige äußere Komponente (2), die mit einer Passung (3) auf der inneren Komponente gelagert ist. Die Aufgabe liegt darin, eine bewegliche oder feste Verbindung aus Metall, Keramik, Glas oder sinterfähigem Kunststoff vorzuschlagen, die mit hoher Passgüte und geringem Fertigungsaufwand herstellbar ist und sich insbesondere für die Fertigung von Mikrosystemen eignet. Die Aufgabe wird durch eine Verbindung gelöst, wobei innere und äußere Komponente jeweils durch Sinterung aus einem spritzgegossenen oder pulvergepressten Grünkörper jeweils aus zumindest einem sinterfähigen Werkstoff und einem Binder hergestellt sowie undemontierbar formschlüssig ineinander gefügt sind.

**EP 1 884 332 A2**

**Beschreibung**

Die Erfindung betrifft eine Verbindung gemäß des ersten Patentanspruchs sowie ein Verfahren zur Herstellung derselben gemäß des zehnten Patentanspruchs.

Die genannten Verbindungen bestehen mindestens aus einer Welle vorzugsweise mit kreisförmigen Querschnitt und einer mit einer bestimmten Passung auf diese aufgesetzte Nabe (z.B. Kupplung oder Zahnrad), die als bewegliche Verbindungen mit einer Spaltbreite (Spielpassung) oder auch als feste Verbindungen mit einer Presspassung konzipierbar ist. Welle und Nabe sind aus gleichen oder unterschiedlichen Materialien gefertigt, die prinzipiell alle Werkstoffklassen umfassen können, beispielsweise Metallen, Keramiken, Kunststoffen oder Gläser. Sie sind in der Technik allgemein bekannt.

Üblicherweise werden die Komponenten einer Verbindung mit den erforderlichen Abmessungen einzeln hergestellt, bei Bedarf mechanisch nachbearbeitet und im Anschluss daran montiert.

Insbesondere in der Feinwerk- und Mikrosystemtechnik bedeuten jedoch zusätzliche Montageschritte mit einer zunehmenden Miniaturisierung ein in den Vordergrund tretender erheblicher Mehraufwand und damit ein Kostenfaktor.

Insofern wird bei kostengünstigen Produkten mit mindestens zwei zueinander beweglichen Komponenten diese im Rahmen von Mehrkomponenten-Spritzgussverfahren hergestellt. Dabei werden die für die Welle und die Nabe unterschiedliche Kunststoffe zu einem Teil verarbeitet, wobei in einem Schritt zunächst die Komponente mit dem bei höheren Temperaturen schmelzenden Material als erste Komponente hergestellt wird. Anschließend erfolgt das Spritzgießen der zweiten Komponente in einer erweiterten ersten oder einer zweiten Form mit der darin verbliebenen bzw. neu eingelegten ersten Komponente mit einer bei geringeren Temperaturen schmelzenden Formmasse. Die bisherige aufwendige Montage der einzelnen Komponenten kann auf diese Weise entfallen.

Eine weitere Anwendung des Zweikomponentenspritzgießens ist die Herstellung von festen Kunststoffverbindungen in Form von Hart-Weich-Kombinationen für Dichtelemente oder die MID-Technologie (Moulded Interconnected Devices) zur Realisierung unterschiedlich elektrochemisch aktiver Bereiche auf Kunststoffoberflächen für eine nachfolgende Metallisierung.

Derartige Kunststoffverbindungen eignen sich aber nur für einen begrenzten Temperaturbereich. Zudem sind zumindest für eine Komponente nur weiche niedrig schmelzende Kunststoffe zulässig, womit die Belastbarkeit, die Standfestigkeit und insbesondere die Notlaufeigenschaften einer beweglichen Verbindung erheblich eingeschränkt sind. Ferner lassen sich nur schwerlich bestimmte Lagertoleranzen oder ein definiertes Spaltmaß zwischen den beiden Verbindungspartnern exakt einstellen.

Die Mehrkomponenten-Spritzgusstechnik zur Herstellung von beweglichen Verbindungen wie Gelenken und Wellen-Naben-Verbindungen oder Hart-Weich-Verbindung aus Kunststoffen ist jedoch nicht ohne weiteres auf andere Materialkombinationen übertragbar. Insbesondere bewegliche Verbindungen aus steiferen Materialien wie Metalle, Keramiken oder Glas erfordern beispielsweise mangels Nachgiebigkeit eine Einhaltung sehr exakter Toleranzen. Weiterhin ist nach der Formgebung pulverhaltiger Formmassen zur Herstellung von festen Werkstoffen ein Sinterprozess notwendig.

Insofern werden bewegliche Verbindungen aus den genannten anderen Materialkombinationen meist aus mehreren vorgefertigten Komponenten im Rahmen mehrerer mechanischer Fertigungsschritte angepasst und aufwendig montiert. Bewegliche Verbindungen aus Metallen, Keramiken oder anderen Sinterwerkstoffen mit den gegenüber den Hart-Weich-Verbindungen aus Kunststoffen verbesserten Eigenschaftsprofile, die über ein Mehrkomponenten-Spritzgussverfahren oder -Pulverpressverfahren ohne nachgelagerten mechanischen Fertigungsschritte herstellbar sind, sind nicht bekannt.

Ferner beschreibt die DE 27 36 702 A1 ein Verfahren zur Herstellung eines aus beweglich miteinander verbundenen Elementen zusammengesetzten Gegenstands, wobei die Elemente ausschließlich aus Metall bestehen. Hierbei wird eine bereits fertig gestellte erste Komponente in eine Form einer zweiten Komponente eingelegt, bevor sie formschlüssig unter Bildung einer Passung mit dieser zu einer beweglichen Verbindung vergossen wird. Dabei liegt der Schmelzpunkt des Materials der zweiten Komponente unterhalb des der ersten Komponente. Damit kommt es durch die Erstarrungsschwindung und die thermische Abkühlung des zweiten Werkstoffs zu einem formschlüssigen Verbund zwischen den beiden Komponenten. Im Anschluss daran erfolgt eine erneute thermische Behandlung der verbundenen Komponenten, wobei es zu einer Ausbildung einer Temperaturdifferenz zwischen den beiden Komponenten kommt, die zur Ausbildung eines gewünschten Spaltmaßes der Passung nutzbar ist.

Das Verfahren ist jedoch aufwendig und beschränkt sich auf Verbindungen aus unterschiedlichen über Schmelzen verarbeitbare Metalle. Die erste Komponente muss bereits vor der Formgebung des Verbundes in Endkontur vorliegen. Zur Realisierung des für die Funktion der Passung erforderlichen Spaltmaßes zwischen den beiden Komponenten ist zudem ein weiterer sehr zeitaufwendigen Fertigungsschritt mit definierten Temperaturgradienten erforderlich, der insbesondere bei Klein- oder Mikroteilen schwer oder gar nicht realisierbar ist.

Davon ausgehend liegt die **Aufgabe der Erfindung** darin, eine feste oder bewegliche Verbindung aus mindestens einem Metall, einer Keramik, einem Glas oder einem sinterbaren Kunststoff sowie die Herstellung derselben vorzuschlagen, die mit hoher Passgüte und geringem Fertigungsaufwand herstellbar ist, die eine Passung (Spiel oder Pressung) zwischen mindestens einer inneren und mindestens einer äußeren Komponente aufweist, das axial und radial verschieden groß eingestellt werden kann, und sich insbesondere für die Fertigung von Kleinteilen oder Mikrosystemen eignet.

Die Aufgabe wird mit den Merkmalen der unabhängigen Ansprüche 1 und 10 gelöst. Hierauf rückbezogene Unteransprüche geben vorteilhafte Ausgestaltungen wieder.

Die Erfindung umfasst eine Verbindung mit einer jeweils einstückigen inneren und äußeren Komponente, wobei die äußere Komponente über einen Fügeflächenbereich formschlüssig die innere Komponente unter Bildung einer Passung (Spiel oder Pressung) als Lagerung oder Presspassung teilweise umfasst. Dabei gehen innere und äußere Komponente eine undemontierbare, d.h. nur mit einer einher gehenden Zerstörung einer der beteiligten Komponenten demontierbaren formschlüssige Verbindung ein.

Hierzu werden beispielsweise für eine Welle als innere Komponente und eine Nabe als äußere Komponente einer Wellen-Naben-Verbindung bevorzugt unterschiedliche Sinterwerkstoffe in Form von zwei Metallen oder zwei Keramiken beispielsweise zu einer Hart-Duktil-Verbindung zu einem Teileverbund verarbeitet. Zur Formgebung werden die Sinterwerkstoffe in Form von Pulvern mit Bindern zu Formmassen gemischt. Hierbei können für die Komponenten der Formmasse die gleichen Binder verwendet werden. Dazu eingesetzte bevorzugte Verfahren sind das Zweikomponentenspritzgießen oder das Zweikomponentenpulverpressen.

Die Herstellung dieser Verbindung umfasst eine Sinterung von spritzgegossenen oder gepressten Grünkörpern der beiden an der Verbindung beteiligten Komponenten, wobei die innere und äußere Komponente der Verbindung bereits als Grünkörper undemontierbar zusammengesetzt sind. Vorzugsweise werden die Grünkörper der im Grünzustand bereits zu einer Verbindung zusammengesetzten Komponenten durch ein Zweikomponenten-Spritzguss- oder Pulverpressverfahren, d.h. im Rahmen eines Formgebungsablaufes hergestellt. Alternativ erfolgt auch eine Herstellung einer der Komponenten mit einem Formgebungsablauf, während der Grünkörper der zweiten Komponente in einem zweiten Formgebungsablauf in oder über den Grünkörper der ersten Komponenten hergestellt wird. Die letztgenannten Vorgehensweisen haben zwar den Nachteil eines höheren Aufwands, ermöglichen aber eine einfachere Werkzeugtechnik oder eine Beschichtung eines ersten Grünkörpers vor einem Anformen (Anspritzen oder Anpressen) des zweiten Grünkörpers. Verwendet man das Einlegespritzgießen oder das Pressen mit Einlegeteil, so reduziert sich der Aufwand für die Werkzeugtechnik (Einfachere Werkzeuggestaltung). Es erhöht sich jedoch der prozesstechnische Aufwand, da das Einlegeteil zuvor in einer anderen Kavität gefertigt und positioniert in die Kavität eines zweiten Werkzeugs eingelegt wird. Insbesondere bei der Variante mit Einlegetechnik ist es vorteilhaft, in einem Schritt zunächst die Komponente mit der bei höherer Temperatur schmelzenden Formmasse (bzw. Bindanteil) zu formen, einzulegen und danach die zweite Formmasse für die zweite Komponente anzuformen.

Die Sinterung der formschlüssig zur Verbindung gefügten Grünkörper erfolgt innerhalb eines gemeinsamen Sintervorgangs.

Die Verbindung entsteht durch Sintern pulverförmiger Sinterwerkstoffe und unter Nutzung der Unterschiede im Sinterschrumpf der Sinterwerkstoffe, gezielt quantitativ einstellbar durch unterschiedliche Werkstoffauswahl oder Werkstoffdichte. In der Passung bildet sich ein Spalt oder eine Pressung zwischen den Komponenten und damit eine bewegliche bzw. feste Verbindung (Spielpassung bzw. Presspassung) zwischen den Komponenten.

Zusätzlich zum Produktionsverfahren für die Verbindungen, insbesondere gemäß der nachfolgend genannten Ausführungsbeispiele, dem Zwei-Komponenten-Pulverspritzgießen oder -Pulverpressen, erlaubt die erfindungsgemäße Ausgestaltung die Einstellung eines unterschiedlichen axialen und radialen Spalts zwischen den beiden gegeneinander beweglichen Bauteilkomponenten durch eine geeignete Geometriewahl. Neben dem Zwei- oder Mehrkomponentenpulverspritzgießen für die Endkonturnahe Fertigung von komplex geformten Bauteilen (oder Verbindungen) kann die Formgebung weniger komplexer Bauteile auch durch das preisgünstigere Pulverpressen mit zwei (oder mehr) Pulvern (Zwei-Komponenten-Pulverpressen) und Sintern erfolgen.

Vorzugweise sind die Komponenten aus unterschiedlichen Werkstoffen der gleichen Werkstoffgruppe (Sinterwerkstoffen wie Metalle, Keramiken, Gläser oder Kunststoffe) hergestellt. Dies hat gegenüber einer gleichartigen Werkstoffpaarung (z.B. zwei Stähle) den Vorteil, dass die Komponenten sich während der Sinterung nicht oder nur zu einem wesentlich geringeren Teil verschweißen und sich grundsätzlich leichter voneinander lösen lassen und sich auch nicht vermischen (z.B. durch Diffusion).

Die Erfindung findet insbesondere in der Feinwerk- und Mikrotechnik Anwendung, wo eine Einstellung eines Spalts zwischen komplex geformten Bauteilkomponenten in mittleren und großen Stückzahlen nicht mehr wirtschaftlich durch zerspanende Bearbeitung und Montage erfolgen kann.

Die besondere Wahl der Geometrie der Fügeflächenbereiche erlaubt auch bei isotropem Sinterschrumpf trotz konstanter Sinterschrumpfdifferenz der beiden Bauteilkomponenten einen unterschiedlichen Lagerspalt radial gegenüber axial.

Um für eine Spielpassung einen stärkeren Schrumpf der inneren Komponente zu realisieren, sind die Pulverfüllgrade (Verhältnisse von sinterfähigen Werkstoff und Binder) in den Formmassen so zu wählen, dass die innere Komponente mit einem geringeren Füllgrad einen stärkeren Sinterschrumpf hat als die äußere. Des Weiteren kann der Sinterschrumpf bzw. die Dichte der gesinterten Komponenten über die Pulverpartikelgrößenverteilung oder die Sintertemperatur eingestellt werden.

Die Werkstoffauswahl zur Erzeugung einer Spielpassung ist so zu wählen, dass die Welle immer stärker schrumpft als die Nabe.

Außerdem sollte die Welle früher oder zeitgleich, zumindest nicht später, im Vergleich zur Nabe schrumpfen, um während und nach dem Sintern ein zwischenzeitiges öder irreversibles Aufschrumpfen zu vermeiden. Somit können Deformationen oder Rissbildungen vermieden werden.

Zur Erzeugung einer Presspassung ist in analoger Weise der Sinterschrumpf der äußeren Komponente größer zu dimensionieren als der Sinterschrumpf der inneren Komponente.

Im Allgemeinen kann eine niedrige Aufheizrate beim Sintern dazu beitragen, beide Komponenten gleichmäßig zu temperieren, und somit ein vorzeitiges Schrumpfen der äußeren Komponente zu verhindern. Das Mikrowellensintern bewirkt im Gegensatz zur Wärmeeinbringung durch Konvektion, Wärmeleitung oder Bestrahlung eine Erwärmung vom Inneren der Bauteile und ist somit auch bei hohen Heizraten förderlich für einen rechtzeitigen Schrumpf der inneren Komponente (Welle).

Das erfindungsgemäße Verfahren nutzt die Realisierung einer bestimmten Geometrie für die Fügeflächen (Passungen), über die innere und äußere Komponente lose oder fest verbunden werden und ein pulvertechnologisches Verfahren wie das Pulverspritzgießen oder das Pulverpressen für die gleichzeitige Formgebung und Verbindung der Komponenten eines zweiteiligen Bauteils. Die Formgebung der beiden Komponenten erfolgt gleichzeitig bzw. innerhalb eines Prozessschritts auf einer Maschine. Nach der eigentlichen Formgebung kann eine Haftung der beiden Komponenten durch Adhäsion in der berührenden Fläche der Bauteilkomponenten bestehen. Nachfolgend wird durch den Prozessschritt des Sinterns, das für beide Komponenten gleichzeitig und bei gleicher Temperatur erfolgt, die lose oder feste Verbindung erzeugt. Deshalb ist dieses Verfahren sowohl für makroskopische wie auch fein- und mikrotechnische Bauteile vorteilhaft geeignet. Durch die Nutzung eines Unterschieds im Sinterschrumpf verschiedener Bauteilkomponenten mit unterschiedlichen Werkstoffen oder Formmassen mit meist unterschiedlichem Pulverfüllgrad entsteht bei stärkerem Schrumpf der inneren Komponente eine lose Verbindung. Es sind auch Formmassen mit gleichem Füllgrad bei Verwendung von verschiedenen Sinterwerkstoffen als Pulver einsetzbar, wenn man durch das Sintern unterschiedliche Porositäten in den Bauteilkomponenten einstellt. Die Sintertemperatur beträgt nur ca. 70% des Schmelzpunkts des Materials. Das Schrumpfmaß kann durch den jeweiligen Pulvergehalt der Formmassen beim Pulverspritzgießen oder Pulverpressen sowie die Pulverpartikelgrößenverteilung, die Sinteraktivität und die Sintertemperatur beeinflusst werden.

Durch die Wahl unterschiedlicher Pulverpartikelgrößen und/oder spezifischen Oberflächen für verschiedene Pulver kann eine Anpassung der Sintertemperatur unterschiedlicher Werkstoffe erreicht werden. Beispielsweise erreicht man mit feinskaligen Pulvern eine Absenkung der Sintertemperatur, sodass der Werkstoff mit einer höheren Schmelztemperatur als feinskaliges Pulver eingesetzt wird und damit bei der gleichen Temperatur sintert wie ein anderes gröberes Pulver eines anderen Werkstoffs mit niedrigerer Schmelztemperatur.

Wird beispielsweise der gleiche Werkstoff für die beiden Komponenten mit jeweils gleichem Pulveranteil in den Formmassen, jedoch mit deutlich unterschiedlicher Partikelgröße und/oder spezifischer Oberfläche in den Formmassen für die Komponenten eingesetzt, so erreicht man durch die unterschiedliche Sinteraktivität eine unterschiedliche Enddichte und damit unterschiedlichen Sinterschrumpf der Komponenten.

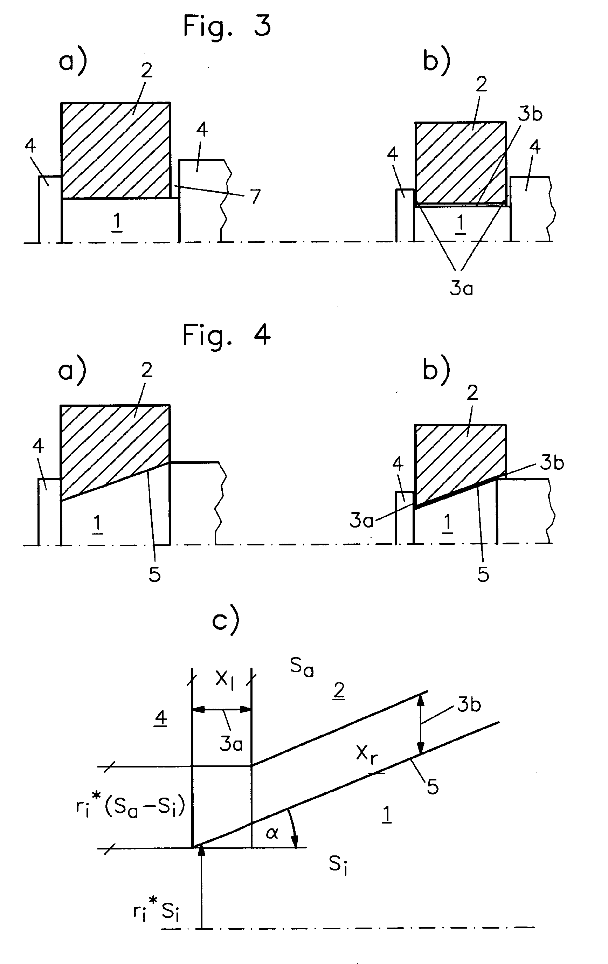

Weiterhin muss für eine Spielpassung bereits bei der Formgebung im Bereich der zylindrischen Passungsflächen der Abstand zwischen den Wellenbünden größer sein als die Nabenbreite bzw. axiale Passungslänge (vgl. z.B. Fig.3, Spalt 7), um ein axiales Aufschrumpfen der Wellenbünde auf die Nabe zu verhindern.

In jeden Fall liegt die erfindungsgemäße formschlüssige Verbindung bereits im Grünzustand in einer nicht zerstörungsfrei demontierbaren Ausführung vor. Die Realisierung der Verbindung erfolgt in vorteilhafter Weise als Formgebung des kompletten funktionsfähigen und in seinem Lagerspiel (Passungstoleranz) fix eingestellten Bauteil, was aufwendige Montageschritte eliminiert. Dieser Vorteil tritt insbesondere in der Fertigung von Mikrosystemen in den Vordergrund, bei denen mit einer zunehmenden Miniaturisierung mechanische Verarbeitungsschritte als Kostenfaktor zunehmend in den Vordergrund rücken.

Die Erfindung wird anhand von Ausführungsbeispielen mit den folgenden Figuren näher erläutert. Es zeigen:

**Fig.1a und b** eine seitliche Schnittdarstellung einer ersten Ausführungsform mit zylindrischer Passung und mittiger Anschlagführung im ungesinterten Grünzustand (**a**) und im gesinterten Endzustand (**b**),

**Fig.2a, b und c** eine seitliche Schnittdarstellung einer zweiten Ausführungsform mit teilweise konischer Passung und mittiger Anschlagführung im ungesinterten Grünzustand (**a**) und im gesinterten Endzustand (**b**) sowie der Passungsgeometrie im Detail (**c**),

**Fig.3a und b** eine seitliche Schnittdarstellung einer dritten Ausführungsform mit zylindrischer Passung und seitlichen Anschlagführungen im ungesinterten Grünzustand (**a**) und im gesinterten Endzustand (**b**),

**Fig.4a, b und c** eine seitliche Schnittdarstellung einer vierten Ausführungsform mit konischer Passung und seitlicher Anschlagsführung im ungesinterten Grünzustand (**a**) und im gesinterten Endzustand (**b**) sowie der Passungsgeometrie im Detail (**c**),

**Fig.5a bis d** eine seitliche Schnittdarstellung einer fünften und sechsten Ausführungsform jeweils mit zwei gegenläufig konischen Passungsbereichen im ungesinterten Grünzustand (**a, c**) und im gesinterten Endzustand (**b, d**),

**Fig.6a und b** eine seitliche Schnittdarstellung einer siebten Ausführungsform mit teilweise konischer Passung und seitlicher Anschlagführung im ungesinterten Grünzustand (**a**) und im gesinterten Endzustand (**b**) sowie

**Fig.7a und b** eine seitliche Schnittdarstellung einer achten Ausführungsform mit sphärischen Passungsanteilen im ungesinterten Grünzustand (**a**) und im gesinterten Endzustand (**b**).

Alle dargestellten Ausführungsbeispiele der Verbindung umfassen eine innere Komponente **1**, auf die eine äußere Komponente **2** unter Bildung einer Passung **3** (axiale Passung **3a**, radiale Passung **3b**) undemontierbar formschlüssig aufeinander gefügt sind. Alle mit (**a**) gekennzeichneten Figuren zeigen die Verbindung im vorzugsweise mittels Zweikomponenten-Spritzgussverfahren hergestellten Grünzustand, während die mit (**b**) gekennzeichneten Figuren den gesinterten Endzustand repräsentieren.

Alle Ausführungsbeispiele zeigen im gesinterten Endzustand eine Spielpassung mit einem Passungsspalt. Eine Spielpassung erhält man bei gleichen Werkstoffen für die Komponenten **1** und **2** dadurch, dass man während des Zweikomponentenspritzgusses des Grünkörpers die Spritzgussmasse (Formmasse) der jeweils äußeren, die Passung umhüllende Komponente **2** beispielsweise mit einem höheren Anteil an sinterfähigen Werkstoff ausstattet, was einen geringeren Schrumpf dieser Komponente bei der Sinterung bewirkt.

Wird anstelle einer Spielpassung eine Presspassung erwünscht, wird anstelle des Werkstoffanteils der Binderanteil und/oder der Feinpulveranteil und/oder die Oberflächenaktivität (einstellbar über die Partikelgröße und/oder spezifische Oberfläche) der äußeren, die Passung umhüllende Komponente **2** erhöht.

Auf diese Weise übersteigt der Sinterschrumpf der äußeren Komponente der der inneren Komponente.

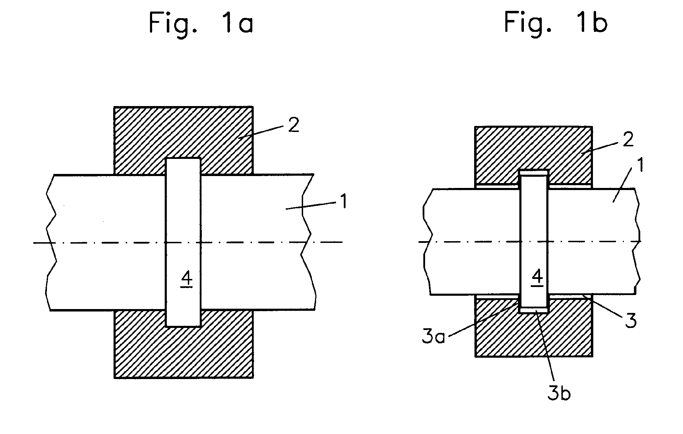

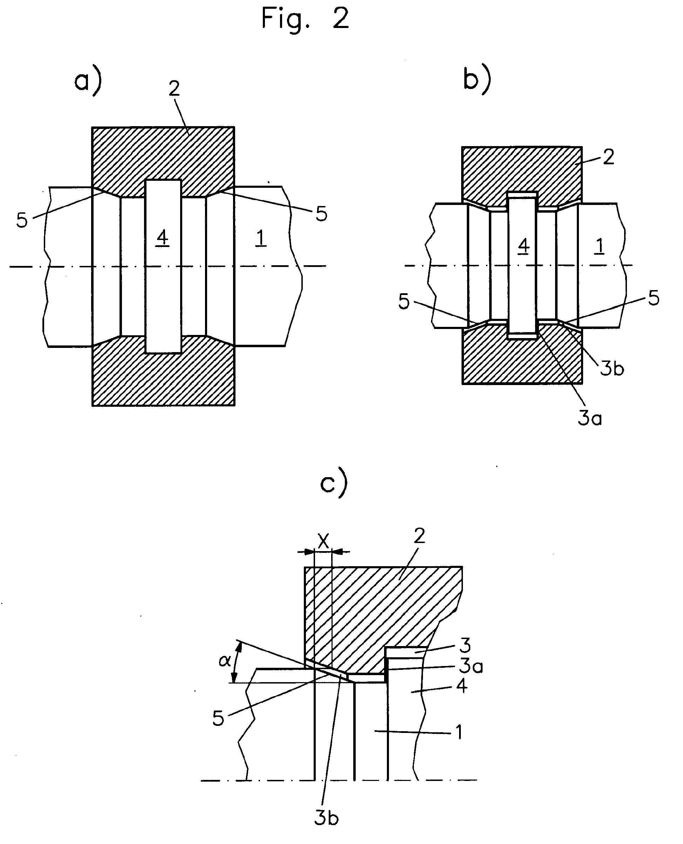

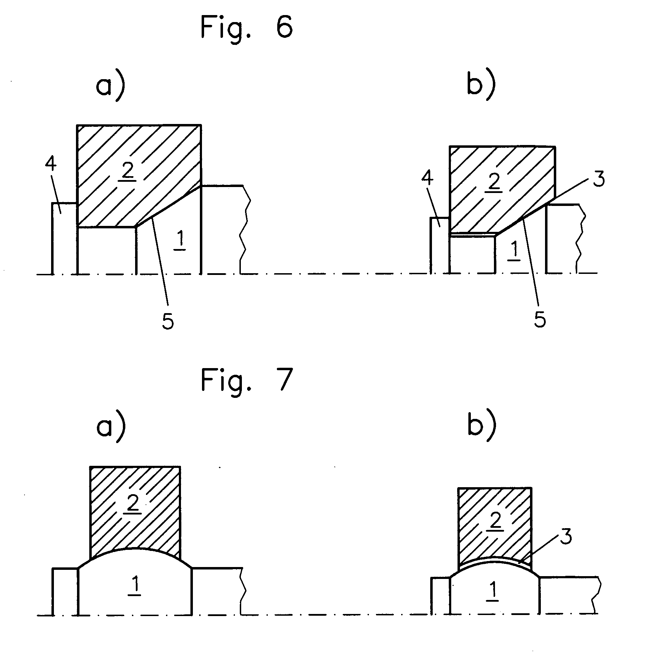

Einige der Ausführungsbeispiele weisen eine oder mehrere an die innere Komponente **1** einstückig angeformte Anschlagführung **4** auf. Sie wirkt auf eine entsprechende Gegenfläche der äußeren Komponente **2**. Je nach subjektiver Auslegung kann die Anschlagführung als Gegenfläche und umgekehrt bezeichnet werden, wobei die Auslegung der Erfindung grundsätzlich beide Varianten abdeckt. Sie ist vorzugsweise umlaufend und dient als axiale Führung der äußeren Komponente **2** auf der Passung **3**. Sie kann als separate Anformungen, wie in **Fig.1 und 2** dargestellt, beidseitig wirkend bevorzugt mittig in der Passung, wie in **Fig.3** dargestellt, als zwei jeweils gegeneinander ausgerichtete Anschläge beidseitig der Passung oder, wie in **Fig.4 und 6** dargestellt, auf einer Seite der Passung und einseitig wirkend angeordnet sein. Als axiale Führung (Anschlagsführung), jedoch nicht als separate Anformung einer Komponente **1** oder **2**, dienen auch verjüngende Passungsflächen, wie die in **Fig.2, 4, 5** und **6** dargestellten Kegelstumpfmantelflächenbereiche **5** der Passung **3** oder die in **Fig.7** dargestellten axial formschlüssig wirkende Kugelflächensegmente **6**.

Die einfachste Form der Anschlagführung **4** ist ein Wellenbund mit rechteckigem Querschnitt (vgl. **Fig.1a und b**), der mittig oder außermittig von der inneren Komponente 1 oder der äußeren Komponente **2** (im Beispiel z.B. ein Zahnradfuß) umschlossen wird. Die Breite b des Wellenbundes und die Sinterschrumpfdifferenz $(s_a - s_i)$ zwischen den für eine Spielpassung konzipierten Komponenten **1** und **2** bestimmt das minimale axiale Spiel A (vgl. axiale Spiel **3a**)

$$A = b\,(s_a - s_i). \qquad\qquad [1]$$

Das radial Spiel R (vgl. radiale Spiel **3b**) ist in allen Ausführungsbeispielen vorgeben durch den minimalen Durchmesser d (doppelter Radius $r_i$) der Passung **3** im Grünteil und der vorgenannten Sinterschrumpfdifferenz $(s_a - s_i)$:

$$R = r_i\,(s_a - s_i). \qquad\qquad [2]$$

Der in [2] genannte Zusammenhang gilt jedoch nur bei zentrischer Lage der Welle in der Nabe. Eine weitere Ausführungsform stellt die Variante mit beidseitiger konischer Passung (Kegelstumpfmantelflächenbereiche **5** als Führung) dar (**Fig.2a bis c**). Der Vorteil dieser Ausgestaltungsform ist die Vermeidung oder Einschränkung von Kippbewegungen bedingt durch die Konusflächen. Das axiale Spiel A berechnet sich aus Formel 1, während sich ein radiales Spiel Y zweier gleichartiger (= gleicher Konussteigungswinkel $\alpha$ und gleicher maximale Radius $r_a$ der Kegelstumpfmantelflächenbereiche **5**) gegenläufigen konischen Passungen (vgl. **Fig.2c**) zu

$$Y = r_a(s_a-s_i) - B/2 * \tan\alpha\ (s_a-s_i) \qquad [3]$$

bestimmt. Die Herstellung beweglicher Wellen-Naben-Verbindungen mit beidseitigem Bund als Anschlagführung **4** erfordert bereits im Grünzustand einen umlaufenden Spalt 7 (vgl. **Fig.3a**), der den größeren Sinterschrumpf $s_a$ der äußeren Komponente **2** gegenüber der inneren Komponente **1** abfängt, ohne dass es zu einer festen Einspannung der äußeren Komponente kommt.

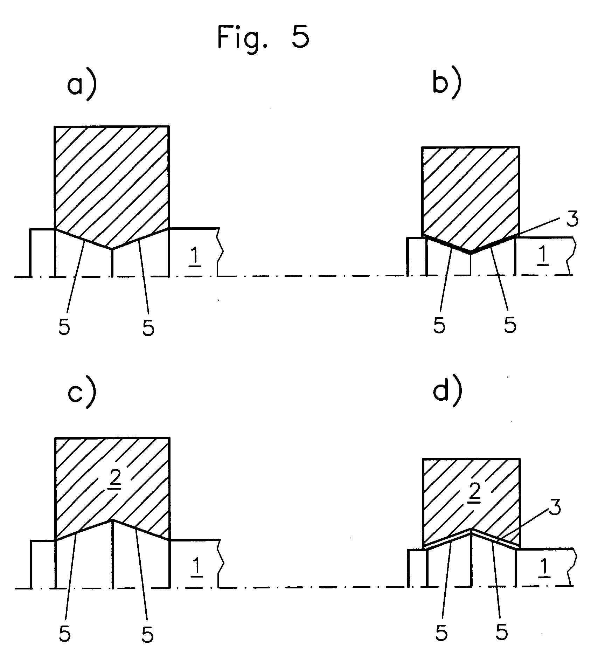

Bei anderen Konfigurationen, bei denen die äußere Komponente **2** zwischen einer Anschlagsführung und einer axial begrenzenden konischen Passungen (z.B. **Fig.2, 4 sowie 6**) oder zwischen zwei begrenzenden konischen Fassungen eingesetzt ist (z.B. **Fig.5a und c**), ist der vorgenannte umlaufende Spalt nicht unbedingt erforderlich, da das Lagerspiel bei konischen Passungen oder nur einer Anschlagführung eine gewisse axiale Verschiebung zulässt.

Im Gegensatz zu herkömmlichen formschlüssigen konischen Wellen-Naben-Verbindungen bietet das vorgeschlagene Prinzip die Herstellung einer formschlüssigen Wellen-Naben-Verbindung in einem Prozessschritt ohne weitere Montageschritte mehrerer Bauteile. Weiterer Vorteil ist, dass über die Geometrie wie z.B. den Grad der Konizität der konischen Passung, der über den Winkel $\alpha$ festgelegt sei, das axiale und radiale Lagerspiel eingestellt wird. Wie aus **Fig.4c** hervorgeht, stehen diese in einem umgekehrt proportionalen Verhältnis zu einander. Unter der Annahme, dass zwischen Welle und Nabe allseitig gleichgroßes Spiel vorliegt, ergibt sich orthogonal zu den Passungsflächen ein Spaltmaß X (vgl. **Fig.4c**) nach

$$X = r_i(s_a-s_i)\ \cos\alpha\ /\ (1+\sin\alpha). \qquad [4]$$

**Fig.5a bis d** zeigen Ausführungsbeispiele, die aufgrund zweier konischer Passungen (Kegelstumpfmantelflächenbereiche **5**) im Grundsatz der Variante aus **Fig.2a bis c** ähneln, jedoch ohne mittlere Anschlagsführung 4. Durch die konischen Passungen werden insbesondere Kippbewegungen auch ohne Wellenbund wirksam eingeschränkt oder unterbunden.

Das Ausführungsbeispiel in **Fig.6a und b** zeigt eine Nabe (innere Komponente 1), die abhängig vom Konuswinkel ähnlich der Ausgestaltungsform in **Fig.4a bis c** axial und radial gelagert ist. Jedoch wird das Spiel um die Schrumpfdifferenz des geraden Wellenabschnitts verringert.

Die Ausführungsform gemäß **Fig.7a und b** ist ein Gelenk und weist sphärische, d.h. punktsymmetrische Passungsflächenanteile auf. Dies bietet den Vorteil, dass eine gewisse Schrägstellung der äußeren Komponente (z.B. Zahnrad) auf der Passung ermöglicht wird, wobei durch eine Verbreiterung der Nabe über die sphärische Passungsfläche hinaus die Anschlagflächen die maximale Schrägstellung vorgeben. In diesem Zusammenhang sind Kugelgelenke, Linearführungen und andere Getriebeelemente als weitere Anwendung dieser Verfahrenstechnik aufzuführen.

Mit der Erfindung können durch geeignete Wahl der Geometrie und der Sinterschrumpfmaße bzw. -differenzen unterschiedliche axiale und radiale Spaltmaße zwischen mindestens zwei Bauteilkomponenten aus mindestens einem Werkstoff bereits im Formgebungsprozess hergestellt werden. Es werden keine Montageschritte benötigt.

Es sind Spielpassungen zwischen den beiden Komponenten aus dem selben Werkstoff realisierbar, wenn die Formgebung mit dem gleichen sinterfähigen Werkstoffpulver aber unterschiedlichen Pulverfüllgrad und/oder unterschiedliche Pulverpartikelgrößen in den Formmassen realisiert wurde. Dies gilt sowohl für das Zwei-Komponenten-Pulverspritzgießen als auch für das Zwei-Komponenten-Pulverpressen. Falls die Verbindung von drei oder mehr Werkstoffen oder Komponenten mit jeweiligen, ggf. unterschiedlichen Schwundmaßen gewünscht werden, so wird ein Drei- oder Mehrkomponenten-Verfahren eingesetzt.

Die Vorteile der Erfindung liegt auch in der gleichzeitigen Formgebung beider Bauteilkomponenten in einem Werkzeug, nur einmaliges Erwärmen des Verbunds auf nur ca. 70 % der Schmelztemperatur der Werkstoffe (d.h. Sintertemperatur), zur Realisierung eine Spielpassung kein Aufschrumpfen eines Werkstoffs auf den anderen im fertigen Bauteil, Erzeugung des Zwischenraums bereits bei der ersten thermischen Behandlung und Einstellung von axial und radial unterschiedlichen Spalten / Zwischenräumen zwischen den Komponenten.

Das Spritzgießen des zusammengesetzten Grünteils einer geraden Wellen-Naben-Verbindung gemäß Fig.1 erfolgte beispielhaft mit folgenden Formmassen und folgenden Prozessparametern:

**Versuchsbeispiel 1:**

Zur Anwendung kam ein $Al_2O_3$-Polystyrol-Feedstock mit 50 % Füllgrad für die Nabe (äußere Komponente) sowie ein $ZrO_2$-Polyolefin/Wachs-Feedstock mit 50 % Füllgrad für die Welle (innere Komponente). Als Ausgangspulver (sinterfähiger Werkstoff) diente $Al_2O_3$ und $ZrO_2$, welches sich beim Spritzguss, aber auch bei einer Sinterung nicht vermischen. Auch die Binder Polystyrol (oder Polymethylmetacrylat) und Polyolefine sind inkompatibel zueinander und haben stark unterschiedliche Schmelztemperaturen. Somit kann eine Durchmischung der beiden Komponenten bei der Formgebung unterbunden werden. Aber auch gleiche Binder für die beiden Ausgangspulver führten zu einer zufrieden stellenden Trennung der beiden Komponenten im gesinterten Zustand. Weitere Vorteile der Verwendung von Polystyrol/ PMMA als Binder einer Komponente ist die hohe Festigkeit sowie die im Vergleich zu Polyolefin/Wachs-Gemischen hohen Schmelztemperaturen, so dass kein Aufschmelzen der ersten spritzgegossen Komponente beim Einspritzen der zweiten Komponente auftritt. Weiterhin erfolgt das Entbindern zuerst primär im Polyolefin/Wachssystem, nachfolgend überwiegend im Polystyrol/PMMA erst bei höheren Temperaturen.

Das Sintern der Oxidkeramiken erfolgte nach dem Entbindern bei einer Sintertemperatur zwischen 1450 °C und 1650 °C und einer Haltezeit zwischen 30 und 60 Minuten. Außerdem führte eine zusätzliche Haltezeit beim Aufheizen (Aufheizunterbrechung) bei etwas niedrigeren Temperaturen bei der inneren Komponente zu einer beginnenden Vorsinterung und damit zu einer selektiven Einleitung des Schrumpfvorganges.

Die Wellen-Naben-Verbindung nach dem Typ gem. **Fig.1** hatte folgende geometrischen Maße: (Grünlingsmaße): Außendurchmesser der äußeren Komponente = 10,25 mm, Länge der äußeren Komponente = 12 mm, Innendurchmesser = 7,78 mm sowie 5,15 mm.

**Versuchsbeispiel 2:**

Zur Anwendung kam ein $Al_2O_3$-Polystyrol-Feedstock mit 51 % Füllgrad für.die Nabe (äußere Komponente) sowie ein $ZrO_2$-Polyolefin/Wachs-Feedstock mit 48 % Füllgrad für die Welle (innere Komponente). Eine kreisförmige Spaltbildung (Fügeflächenbereich) in der Passung zeigte sich nach dem Sintern in Form einer mit bloßem Auge zu erkennenden Phasentrennung nach Beispiel gemäß **Fig.7**.

**Bezugszeichenliste**

1    innere Komponente
2    äußere Komponente
3    Passung (3a axiale Passung, 3b radiale Passung)
4    Anschlagführung
5    Kegelstumpfmantelflächenbereich
6    Kugelflächensegment
7    Umlaufender Spalt

**Patentansprüche**

1.  Verbindung zwischen einer einstückigen inneren Komponente

    (1) sowie einer einstückigen äußeren Komponente (**2**), die mit einer Passung (**3**) über einen Fügeflächenbereich auf der inneren Komponente gelagert ist,

    wobei

    a) die innere und äußere Komponente jeweils durch Sinterung aus einem spritzgegossenen oder pulvergepressten Grünkörper jeweils aus zumindest einem sinterfähigen Werkstoffpulver und einem Binder hergestellt sowie
    b) bereits als Grünkörper undemontierbar formschlüssig ineinander gefügt sind.

2.  Verbindung nach Anspruch 1, wobei die Passung in ihrem Spiel oder in ihrer Pressung über die Geometrie der Fügeflächenbereiche und/oder über die Verhältnisse und/oder Art von sinterfähigen Werkstoffpulver und Binder der Grünkörper der inneren und äußeren Komponente einstellbar ist.

3. Verbindung nach Anspruch 1 oder 2, wobei die einstückige innere Komponente einen kreisförmigen Querschnitt aufweist.

4. Verbindung nach einem der Ansprüche 1 bis 3, wobei die Passung eine Spielpassung ist.

5. Verbindung nach einem der vorgenannten Ansprüche, wobei eine axiale Führung mit mindestens zwei gegeneinander wirkenden Führungsflächen vorgesehen ist, wobei das axiale Spiel durch den minimalen Abstand der Führungsflächen zueinander beeinflusst wird.

6. Verbindung nach Anspruch 5, wobei die Führung mindestens eine umlaufende axial wirkende und auf der inneren Komponente angeformte formschlüssige Anschlagsführung (4) für die äußere Komponente umfasst.

7. Verbindung nach einem der vorgenannten Ansprüche 1 bis 3,
wobei die Passung eine Presspassung umfasst.

8. Wellen-Naben-Verbindung, umfassend eine Verbindung nach einem der vorgenannten Ansprüche mit achsensymmetrischen Passungsflächenanteilen.

9. Gelenk, umfassend eine Verbindung nach einem der Ansprüche 1 bis 5 mit ausschließlich sphärischen Passungsflächenanteilen.

10. Verfahren zur Herstellung einer Verbindung mit einer inneren und einer äußeren Komponente nach einem der vorgenannten Ansprüche mit einem Zweikomponentenspritzgussverfahren oder einem Zweikomponentenpulverpressverfahren, umfassend die Schritte:

a) Spritzgießen oder Pulverpressen eines ersten Grünkörpers einer ersten der beiden Komponenten mit einer ersten Formmasse,
b) Formschlüssiges Anformen eines zweiten Grünkörpers der zweiten der beiden Komponente mit einer zweiten Formmasse an die Passung auf die ersten Komponente, wobei die erste und zweite Formmasse je ein sinterfähiges Werkstoffpulver und ein Binder mit einem Mischungsverhältnis enthält,
c) Gemeinsame Sinterung der formschlüssig miteinander verbundenen Grünkörper.

11. Verfahren nach Anspruch 10, wobei die erste und zweite Formmasse bei der Sinterung einen unterschiedlichen Sinterschrumpf aufweisen.

12. Verfahren nach Anspruch 10 oder 11, wobei die erste und zweite Formmasse jeweils das gleiche sinterfähige Werkstoffpulver und den gleichen Binder enthalten.

13. Verfahren nach Anspruch 8 oder 9, wobei die erste und zweite Formmasse sich voneinander unterscheidende Werkstoffpulver und/oder sich voneinander unterscheidende Binder enthalten.

14. Verfahren zur Herstellung einer Verbindung mit Spielpassung nach Anspruch 10 oder 11, wobei die Formmasse für die äußere Komponente ein größeres Verhältnis von sinterfähigem Werkstoffpulveranteil zu Binderanteil als die der inneren Komponenten aufweist und/oder der Sinterschrumpf des Werkstoffpulvers für die äußere Komponente kleiner als der für die innere Komponente ist.

15. Verfahren zur Herstellung einer Verbindung mit Presspassung nach Anspruch 9, wobei die Formmasse für die äußere Komponente ein gleiches oder kleineres Verhältnis von sinterfähigem Werkstoffpulveranteil zu Binderanteil als die der inneren Komponenten aufweist und/oder der Sinterschrumpf des Werkstoffpulvers für die äußere Komponente gleich oder größer als der für die innere Komponente ist.

16. Verfahren nach einen der Ansprüche 10 bis 15, wobei die besondere Wahl der Geometrie der Fügeflächenbereiche ein unterschiedliches Spiel oder Pressung radial gegenüber axial ermöglicht.

# Fig. 1a

# Fig. 1b

# Fig. 2

a)

b)

c)

# Fig. 3

a)

b)

# Fig. 4

a)

b)

c)

# Fig. 5

a)

b)

c)

d)

## Fig. 6

a)

b)

## Fig. 7

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2736702 A1